# EUROPÄISCHE PATENTANMELDUNG

(11) **EP 1 614 735 A1**
(43) Veröffentlichungstag der Anmeldung: **11.01.2006**
(21) Anmeldenummer: 05105518.4
(22) Anmeldetag: 22.06.2005
(51) Int. Cl.: C09J 153/00, C09J 7/00, C09J 133/10

(54) **Haftklebemasse**

(30) Priorität: 08.07.2004 DE 102004033242
(71) Anmelder: tesa AG, 20253 Hamburg (DE)
(72) Erfinder: Husemann, Marc Dr., 22605, Hamburg (DE); Dollase, Thilo Dr., 22391, Hamburg (DE)
(74) Vertreter: Stubbe, Andreas

(57) **Zusammenfassung**

Die Erfindung betrifft eine Haftklebemasse. Dabei ist vorgesehen, daß die Haftklebemasse, zumindest 50 Gew.-% zumindest eines Blockcopolymers aus einer Comonomerzusammensetzung umfaßt, die Acrylsäurederivate oder Methacrylsäurederivate umfaßt, wobei
das Blockcopolymer eine Einheit P(A)-P(B)-P(A) aus einem Polymerblock P(B) und zwei Polymerblöcken P(A) umfaßt;
die Polymerblöcke P(A) unabhängig voneinander Homo- oder Copolymerblöcke aus Monomeren A darstellen, wobei die Polymerblöcke P(A) jeweils eine Erweichungstemperatur im Bereich von + 20 °C bis + 175 °C aufweisen;
P(B) einen Homo- oder Copolymerblock aus Monomeren B darstellt, wobei der Polymerblock P(B) eine Erweichungstemperatur im Bereich von - 130 °C bis + 10 °C aufweist; und
die Polymerblöcke P(A) und P(B) nicht homogen miteinander mischbar sind.

## Beschreibung

Die Erfindung betrifft eine Haftklebemasse sowie deren Verwendung. Sie betrifft insbesondere eine Haftklebemasse, die aufgrund ihrer Dieselfestigkeit, ihrer Lösungsmittelbeständigkeit und ihres geringen Ausgasungs- bzw. Foggingverhaltens im Automobilbereich einsetzbar ist.

Lösungsmittelbeständige, speziell dieselfeste Haftklebemassen werden im Automobilbereich für verschiedene Anwendungen gefordert, insbesondere für den Einsatz im Motorenbereich. Zusätzlich zur Diesel- und Lösungsmittelbeständigkeit steigen die Anforderungen in der Automobilindustrie immer weiter an. Beispielsweise wird für Anwendungen als Kabelbandagierbänder zusätzlich gefordert, daß die zum Einsatz kommenden Selbstklebebänder in einem weiten Temperaturbereich verwendbar sind, ein möglichst geringes Ausgasungs-/Foggingverhalten zeigen oder auch auf neuen Kabelisoliermaterialien (wie z. B. Polyethylen oder einem Copolymerisat aus Ethylen und Chlortrifluorethylen) sehr gut haften.

Um diese Anforderungen zu erfüllen, bedarf es besonderer Haftklebemassen. Zur Zeit werden vielfach Naturkautschukklebemassen für solche Anwendungen eingesetzt. US 5,681,654 beschreibt z. B. ein Selbstklebeband, das als Haftklebemasse eine Kautschukklebemasse aufweist, die über Schwefel vemetzt wird. Naturkautschuke weisen aber ungünstiges Alterungsverhalten besonders bei erhöhten Temperaturen auf, wie sie im Motorenbereich durchaus vorkommen können.

Daher ist in der Automobilindustrie als Trend erkennbar, vermehrt Haftklebemassen auf Basis von Acrylatcopolymeren einzusetzen. Acrylathaftklebemassen weisen generell den Vorteil auf, über einen größeren Temperaturbereich hinweg einsetzbar zu sein, sehr witterungsstabil zu sein und auch nach der Vernetzung eine gute Resistenz gegen Lösungsmittel zu besitzen. Außerdem erweist sich das Alterungsverhalten als unkritisch.

Um die Anforderung der geringen Ausgasung zu gewährleisten, wurden vermehrt Acrylatschmelzhaftkleber eingesetzt. Hier haben sich insbesondere die Schmelzhaftkleber der BASF AG bewährt, die kommerziell unter dem Namen UV acResins™ 258 vertrieben werden. Diese weisen den Vorteil auf, leicht aus der Schmelze verarbeitbar zu sein, und sind zudem durch die UV-Vernetzbarkeit lösungsmittelbeständig. In DE 198 07 752 wird die Vernetzung solcher Acrylathotmelts für Kabelbandagierbänder beschrieben. Hier wird als besondere, positive Eigenschaft das Foggingverhalten hervorgehoben.

Dennoch besitzen diese Acrylatschmelzhaftkleber auch Nachteile. Durch die UV-Vernetzung steigt die Scherfestigkeit der Haftklebemasse an, aber es entstehen auch leichtflüchtige Fragmente, die zu Geruchsbelästigungen führen. Somit stellt sich kein Fogging ein, aber die Haftklebemassen riechen nach der UV-Vemetzung sehr unangenehm. Diese Eigenschaften sind von Automobilherstellern nicht erwünscht. Weiterhin sind diese Haftklebemässen nicht sehr scherfest, da das Ausgangsmolekulargewicht der UV acResins™ nur relativ gering ist und somit nur schwer zu erhöhen ist. Auch dies kann sich zu einem Nachteil entwickeln, da die Kabelbäume in der Automobilindustrie immer größere Dimensionen durch die zunehmende elektronische Weiterenfinricktung annehmen. Hier werden in Zukunft ebenfalls hohe Anforderungen gestellt, da man diese Kabelbäume sehr stramm wickeln möchte und durch die hohe Zugspannung ebenfalls die Anforderung an die innere Kohäsion der Haftklebemasse steigt.

Weiterhin möchte man den Produktionsprozeß bedeutend effizienter gestalten. Bei den herkömmlichen Kabelbadagierbändem wird entweder aus Lösung aufgetragen und dann thermisch oder durch actinische Bestrahlung vemetzt. Dieser Prozeß ist neben der geringen Umweltfreundlichkeit nicht sehr effizient. Dies liegt daran, daß blasenfreies Lösungsmittelverdampfen im Trockenkanal nur bei geringen Bahngeschwindigkeiten, also Beschichtungsgeschwindigkeiten, möglich ist. Der alternative Hotmelt-Prozeß weist zwar den Vorteil der hohen Beschichtungsgeschwindigkeiten auf, aber hier bedarf es eines zusätzlichen Vernetzungsschrittes, der wiederum Kosten verursacht. Bei sehr hohen Beschichtungsgeschwindigkeiten bedarf es einer großer Anzahl UV-Strahler, um die erforderliche UV-Dosis zur Vernetzung einzubringen.

Aufgabe der Erfindung ist es, die Nachteile nach dem Stand der Technik zu beseitigen. Es soll insbesondere eine Haftklebemasse angegeben werden, die sehr effizient hergestellt werden kann, die im Vergleich zum Stand der Technik im Hinblick auf Dieselfestigkeit, Ausgasungsverhalten und Kohäsion verbesserte Eigenschaften aufweist und somit für den Einsatz im Automobilbereich geeignet ist.

Diese Aufgabe wird durch die Merkmale der Ansprüche 1, 20 und 21 gelöst. Zweckmäßige Ausgestaltungen der Erfindungen ergeben sich aus den Merkmalen der Ansprüche 2 bis 19 und 22.

Nach Maßgabe der Erfindung ist eine Haftklebemasse vorgesehen, die zumindest 50 Gew.-% zumindest eines Blockcopolymers aus einer Comonomerzusammensetzung umfaßt, die Acrylsäurederivate oder Methacrylsäurederivate umfaßt, wobei
das Blockcopolymer eine Einheit P(A)-P(B)-P(A) aus einem Polymerblock P(B) und zwei Polymerblöcken P(A) umfaßt;
die Polymerblöcke P(A) unabhängig voneinander Homo- oder Copolymerblöcke aus Monomeren A darstellen, wobei die Polymerblöcke P(A) jeweils eine Erweichungstemperatur im Bereich von + 20 °C bis + 175 °C aufweisen;
P(B) einen Homo- oder Copolymerblock aus Monomeren B darstellt, wobei der Polymerblock P(B) eine Erweichungstemperatur im Bereich von - 130 °C bis + 10 °C aufweist; und
die Polymerblöcke P(A) und P(B) nicht homogen miteinander mischbar sind.

Die erfindungsgemäße Haftklebemasse besitzt bei einer Lagerung von 12 Stunden bei 120°C einen Ausgasungswert von weniger als 2000 µg/g Haftklebemasse, besteht die Prüfmethode A im Sinne der Dieselfestigkeit und ist lösungsmittelbeständig im Sinne der Prüfmethode F.

Die erfindungsgemäße Haftklebemasse zeichnet sich dadurch aus, daß sie auf mindestens einem Acrylatblockcopolymer beruht, welche die oben genannten Vorgaben erfüllt und sich insbesondere durch die folgenden Kriterien auszeichnet:
- Nutzungsmöglichkeit einer großen Anzahl von Monomeren für die Synthese der Haftklebemasse, so daß eine breite Palette von Haftklebeeigenschaften durch die chemische Zusammensetzung eingestellt werden kann;
- Herstellung hoch kohäsiver Haftklebemasseschichten ohne zusätzlichen Vernetzungsschritt im Herstellungsprozeß;
- Wahlmöglichkeit bei Einsatz der Comonomere, welche eine Steuerung der Wärmescherfestigkeit ermöglicht, insbesondere auch eine anhaltend gute Kohäsion und damit Halteleistung bei hohen Temperaturen (> +60 °C).

Die Einheit P(A)-P(B)-P(A) wird nachfolgend auch als Triblockcopolymer bezeichnet.

Die Erfindung wird nachstehend mit Bezug auf die Zeichnungen ausführlicher beschrieben, von denen
- Fig. 1: eine Querschnittsdarstellung eines Klebebandes mit einschichtigem Aufbau zeigt, daß aus einer erfindungsgemäßen Haftklebemasse besteht;
- Fig. 2: eine Querschnittsdarstellung eines Klebebandes mit dreischichtigem Aufbau zeigt, daß Schichten von erfindungsgemäßen Haftklebemassen aufweist; und
- Fig. 3: eine Querschnittsdarstellung eines Klebebandes mit zweischichtigem Aufbau zeigt, daß eine Schicht einer erfindungsgemäßen Haftklebemasse aufweist.

Die Erfindung betrifft dementsprechend dieselfeste Haftklebemassen mit einem geringen Ausgasungsverhalten, welche mindestens 50 % eines Blockcopolymers enthalten, das in Anspruch 1 definiert wurde.

Die Erfindung umfaßt somit Haftklebemassen, die bei einer Lagerung von 12 Stunden bei 120 °C einen Ausgasungswert von weniger als 2000 µg/g Klebemasse besitzen, die die Prüfmethode A im Sinne der Dieselfestigkeit bestehen, die lösungsmittelbeständig im Sinne der Prüfmethode F sind und die zumindest ein Blockcopolymer umfassen, das zumindest teilweise auf (Meth-)Acrylsäurederivaten basiert, wobei das Blockcopolymer oder die Blockcopolymere mindestens die Einheit P(A)-P(B)-P(A) aus wenigstens einem Polymerblock P(B) und wenigstens zwei Polymerblöcken P(A) aufweisen und wobei
- P(A) unabhängig voneinander Homo- oder Copolymerblöcke aus Monomeren A repräsentieren, wobei die Polymerblöcke P(A) jeweils eine Erweichungstemperatur im Bereich von + 20 °C bis + 175 °C aufweisen,
- P(B) einen Homo- oder Copolymerblock aus Monomeren B repräsentiert, wobei der Polymerblock P(B) eine Erweichungstemperatur im Bereich von - 130 °C bis + 10 °C aufweist, und
- die Polymerblöcke P(A) und P(B) nicht homogen miteinander mischbar sind.

Im folgenden werden die Polymerblöcke P(A) auch als "Hartblöcke" und die Polymerblöcke P(B) als "Elastomerblöcke" bezeichnet.

Unter Erweichungstemperatur wird in diesem Zusammenhang bei amorphen Systemen die Glasübergangstemperatur und bei semikristallinen Polymeren die Schmelztemperatur verstanden. Glastemperaturen werden als Ergebnisse aus quasistatischen Verfahren wie z. B. Differential Scanning Calorimetry (DSC) angegeben.

Als im erfindungsgemäßen Sinne besonders vorteilhaft haben sich Haftklebemassen erwiesen, die bei einer Lagerung von 12 Stunden bei 120 °C einen Ausgasungswert von weniger als 2000 µg/g Klebemasse besitzen, die die Prüfmethode A im Sinne der Dieselfestigkeit bestehen und bei denen der Aufbau des Blockcopolymers oder der Blockcopolymere durch eine oder mehrere der folgenden allgemeinen Formeln beschrieben werden kann:

P(A)-P(B)-P(A) (I)

P(B)-P(A)-P(B)-P(A)-P(B) (II)

[P(B)-P(A)]ₙX (III)

[P(B)-P(A)]ₙX[P(A)]ₘ (IV),

- wobei n = 3 bis 12, m = 3 bis 12 und X eine multifunktionelle Verzweigungseinheit darstellt, also ein chemisches Bauelement, über das verschiedene Polymerarme miteinander verknüpft sind,
- wobei die Polymerblöcke P(A) unabhängig voneinander Homo- oder Copolymerblöcke aus den Monomeren A repräsentieren, wobei die Polymerblöcke P(A) jeweils eine Erweichungstemperatur im Bereich von + 20 °C bis + 175 °C aufweisen,
- und wobei die Polymerblöcke P(B) unabhängig voneinander Homo- oder Copolymerblöcke aus den Monomeren B repräsentieren, wobei die Polymerblöcke P(B) jeweils eine Erweichungstemperatur im Bereich von - 130 °C bis + 10°C aufweisen.

Bei den Polymerblöcken P(A) kann es sich um Polymerketten einer einzigen Monomersorte aus der Gruppe A oder um Copolymere aus Monomeren verschiedener Strukturen aus der Gruppe A handeln. Insbesondere können die eingesetzten Monomere A in ihrer chemischen Struktur und/oder in der Seitenkettenlänge variieren. Die Polymerblöcke umfassen somit die Spanne zwischen vollkommen homogenen Polymeren über Polymere aus Monomeren gleicher chemischer Grundstruktur, aber unterschiedlicher Kettenlänge und solchen gleicher Kohlenstoffzahl, aber unterschiedlicher Isomerie bis hin zu statistisch polymerisierten Blöcken aus unterschiedlich langen Monomeren mit unterschiedlicher Isomerie aus der Gruppe A. Das entsprechende gilt für die Polymerblöcke P(B) bezüglich der Monomere aus der Gruppe B.

Die Einheit P(A)-P(B)-P(A) kann dabei sowohl symmetrisch [entsprechend P¹(A)-P(B)-P²(A) mit P¹(A) = P²(A)] als auch unsymmetrisch [etwa entsprechend der Formel P³(A)-P(B)-P⁴(A) mit P³(A) # P⁴(A), wobei aber sowohl P³(A) als auch P⁴(A) jeweils Polymerblöcke im Sinne der Definition für P(A) seien] aufgebaut sein.

Eine vorteilhafte Ausführungsform der erfindungsgemäßen Haftklebemasse ist es, wenn die Blockcopolymere einen symmetrischen Aufbau derart aufweisen, daß in der Kettenlänge und/oder der chemischen Struktur identische Polymerblöcke P(A) und/oder daß in der Kettenlänge und/oder der chemischen Struktur identische Polymerblöcke P(B) vorliegen.

P³(A) und P⁴(A) können sich insbesondere in ihrer chemischen Zusammensetzung und/oder ihrer Kettenlänge unterscheiden.

Als Monomere für den Elastomerblock P(B) werden vorteilhaft Acryl(at)monomere eingesetzt. Hierfür sind prinzipiell alle dem Fachmann geläufigen Acryl(at)verbindungen, welche sich zur Synthese von Polymeren eignen, einsetzbar. Bevorzugt werden solche Monomere gewählt, welche Glasübergangstemperaturen des Polymerblocks P(B) auch in Kombination mit einem oder mehreren weiteren Monomeren von kleiner +10 °C bedingen. Entsprechend können bevorzugt Vinylmonomere gewählt werden.

Für die Präparation der Polymerblöcke P(B) werden vorteilhaft
(a) 75 bis 100 Gew.% Acrylsäure- und/oder Methacrylsäurederivate der Formel

   CH₂=CH(R¹)(COOR²) (V)

   eingesetzt, wobei R¹ H oder CH₃ darstellt und R² H oder lineare, verzweigte oder ringförmige, gesättigte oder ungesättigte Alkylreste mit 1 bis 30, vorzugsweise mit 4 bis 18 Kohlenstoffatomen darstellt; und
(b) 0 bis 25 Gew.-% Vinylverbindungen (VI), welche vorzugsweise funktionelle Gruppen enthalten.

Acrylmonomere, die sehr bevorzugt im Sinne der Verbindung (V) als Komponenten für Polymerblöcke P(B) eingesetzt werden, umfassen Acryl- und Methacrylsäureester mit Alkylgruppen, bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacryfat, n-Nonylacrylat, Laurylacrylat, Stearylaaylat, Stearylmethacrylat, deren verzweigte Isomere, wie z. B. 2-Ethylhexylacrylat und Isooctylacrylat, sowie cyclische Monomere wie z. B. Cyclohexyl- oder Norbornylacrylat und Isobornylacrylat.

Weiterhin können optional als Monomere im Sinne der Definition (VI) für Polymerblöcke P(B) Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Auch hier seien beispielhaft ausgewählte, erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril.

Als besonders bevorzugte Beispiele für vinylgruppenhaltige Monomere im Sinne der Definition (VI) für den Elastomerblock P(B) eignen sich weiterhin Hydroxyethylacrylat Hydroxypropylacrylat, Hydroxyethylmethacrylat, Hydroxypropylmethacrylat, n-Methylolacrylamid, Acrylsäure, Methacrylsäure, Allylalkohol, Maleinsäureanhydrid, Itaconsäureanhydrid, Itaconsäure, Benzoinacrylat, acryliertes Benzophenon, Acrylamid und Glycidylmethacrylat, um nur einige zu nennen.

In einer bevorzugten Ausführungsform der erfindungsgemäßen dieselfesten Haftklebemassen enthält einer der oder enthalten mehrere der Polymerblöcke eine oder mehrere aufgepfropfte Seitenketten. Dabei wird nicht eingeschränkt, ob solche Systeme durch einen *graft-from-* (Aufpolymerisation einer Seitenkette, ausgehend von einem bestehenden Polymerrückgrat) oder *graft-to*-Prozeß (Anbindung von Polymerketten an ein Polymerrückgrat über polymeranaloge Reaktionen) erhalten werden.
Insbesondere zur Herstellung solcher Blockcopolymere können als Monomere B derartig funktionalisierte Monomere eingesetzt werden, die einen *graft-from-*Prozeß zum Aufpfropfen von Seitenketten ermöglichen. Hier sind insbesondere Acryl- und Methacrylmonomere zu nennen, die als Funktionalisierung Halogene tragen oder alle anderen funktionellen Gruppen, die beispielsweise einen ATRP-Prozeß (Atom Transfer Radical Polymerization) erlauben. In diesem Zusammenhang sei auch die Möglichkeit genannt, über Makromonomere gezielt Seitenketten in die Polymerketten einzuführen. Die Makromonomere können wiederum aufgebaut sein entsprechend der Monomere B.

In einer speziellen Ausführung dieser Erfindung sind eine oder mehrere funktionelle Gruppen in die Polymerblöcke P(B) eingebaut, die eine strahlenchemische Vernetzung der Polymerblöcke insbesondere mittels UV-Bestrahlung oder durch Bestrahlung mit schnellen Elektronen erlauben. Als Monomereinheiten können mit dieser Zielsetzung insbesondere Acrylester genutzt werden, welche einen ungesättigten Alkylrest mit 3 bis 18 Kohlenstoffatomen enthalten, der mindestens eine Kohlenstoff-Kohlenstoff-Doppelbindung enthält. Für mit Doppelbindungen modifizierte Acrylate eignen sich besonders vorteilhaft Allylacrylat und acrylierte Zimtsäureester. Neben Acrylmonomeren lassen sich sehr vorteilhaft als Monomere für den Polymerblock P(B) auch Vinylverbindungen mit während der (radikalischen) Polymerisation des Polymerblockes P(B) nicht reaktiven Doppelbindungen einsetzen. Besonders bevorzugte Beispiele für entsprechende Comonomere sind Isopren und/oder Butadien, aber auch Chloropren.

Ausgangsmonomere für die Polymerblöcke P(A) werden bevorzugt derart ausgewählt, daß die resultierenden Polymerblöcke P(A) mit den Polymerblöcken P(B) nicht mischbar sind und entsprechend Mikrophasenseparation eintritt. Vorteilhafte Beispiele für Verbindungen, welche als Monomere A eingesetzt werden, sind Vinylaromaten, die auch wahlweise alkyliert sein können, Methylmethacrylat, Cyclohexylmethacrylat, Isobornylmethacrylat und Isobornylacrylat.

Besonders bevorzugte Beispiele sind Methylmethacrylat und Styrol, wobei diese Aufzählung keinen Anspruch auf Vollständigkeit erhebt.

Weiterhin können die Polymerblöcke P(A) aber auch derart als Copolymer aufgebaut sein, daß es zu mindestens 75 % aus den vorstehenden Monomeren A oder einem Gemisch dieser Monomere bestehen kann, was zu einer hohen Erweichungstemperatur führt, aber bis zu 25 % auch Monomere B enthalten kann, was zu einer Erniedrigung der Erweichungstemperatur des Polymerblocks P(A) führt. In diesem Sinne seien beispielhaft aber nicht ausschließlich Alkylacrylate genannt, die entsprechend der Struktur (V) und dem hierzu gesagten definiert sind.

In einer weiteren Ausführungsform der erfindungsgemäßen Haftklebemasse sind Polymerblöcke P(A) und/oder P(B) derart funktionalisiert, daß eine thermisch initiierte Vernetzung durchgeführt werden kann. Als Vemetzer können unter anderem in günstiger Weise gewählt werden: Epoxide, Aziridine, Isocyanate, Polycarbodiimide und Metallchelate, um nur einige zu nennen.

Ein bevorzugtes Charakteristikum der erfindungsgemäßen Blockcopolymere ist, daß ihre Molmasse Mₙ zwischen ca. 10.000 und ca. 600.000 g/mol, bevorzugt zwischen 30.000 und 400.000 g/mol, besonders bevorzugt zwischen 50.000 g/mol und 300.000 g/mol liegt. Der Anteil der Polymerblöcke P(A) liegt vorteilhaft zwischen 5 und 40 Gewichtsprozent des gesamten Blockcopolymers, bevorzugt zwischen 7,5 und 35 Gewichtsprozent, besonders bevorzugt zwischen 10 und 30 Gewichtsprozent. Die Polydispersität des Blockcopolymers liegt bevorzugt bei kleiner 3, gegeben durch den Quotienten aus Massenmittel M_{w} und Zahlenmittel Mₙ der Molmassenverteilung.

Die Verhältnisse der Kettenlängen der Blockcopolymere P(A) zu denen der Blockcopolymere P(B) werden in sehr vorteilhafter Vorgehensweise so gewählt, daß die Blockcopolymere P(A) als disperse Phase ("Domänen") in einer kontinuierlichen Matrix der Polymerblöcke P(B) vorliegen. Dies ist bevorzugt der Fall bei einem Gehalt an Polymerblöcken P(A) von kleiner als ca. 25 Gew.-%. Die Ausbildung von hexagonal gepackten zylindrischen Domänen der Polymerblöcke P(A) ist ebenfalls im erfindungsgemäßen Sinne möglich. Über eine asymmetrische Gestaltung der Triblockcopolymere, wobei in linearen Systemen die Blocklängen der endständigen Polymerblöcke P(A) unterschiedlich sind, kann der Gehalt an Polymerblöcken P(A), bei welcher das System noch eine Kugelrnorphologie ausbildet, auf oberhalb ca. 30 Gew.-% gesteigert werden. Dies ist besonders zu bevorzugen, wenn eine Erhöhung der inneren Festigkeit der Haftklebemasse nötig ist, sowie zur Verbesserung der mechanischen Eigenschaften.

Weiterhin kann es vorteilhaft sein, Blends der obengenannten Blockcopolymere mit Diblockcopolymeren P(A)-P(B) einzusetzen, wobei zur Herstellung der entsprechenden Polymerblöcke P(A) und P(B) die gleichen Monomere wie oben genutzt werden können. Außerdem kann es von Vorteil sein, der aus den Blockcopolymeren, insbesondere aus Triblockcopolymeren (I), oder der aus einem Blockcopolymer/Diblockcopolymer-Blend bestehenden Haftklebemasse zur Verbesserung ihrer Eigenschaften Polymere P'(A) und/oder P'(B) zuzusetzen.

Dementsprechend betrifft die Erfindung weiterhin eine Haftklebemasse, die bei einer Lagerung von 12 Stunden bei 120 °C einen Ausgasungswert von weniger als 2000 µg/g Klebemasse besitzt, die die Prüfmethode A im Sinne der Dieselfestigkeit besteht und die ein Blend eines oder mehrerer Blockcopolymere gemäß Patentanspruch 1 mit einem Diblockcopolymer P(A)-P(B),
- wobei die Polymerblöcke P(A) (der einzelnen Diblockcopolymere) unabhängig voneinander Homo- oder Copolymerblöcke aus den Monomeren A repräsentieren, wobei die Polymerblöcke P(A) jeweils eine Erweichungstemperatur im Bereich von + 20 °C bis + 175 °C aufweisen,
- und wobei die Polymerblöcke P(B) (der einzelnen Diblockcopolymere) unabhängig voneinander Homo- oder Copolymerblöcke aus den Monomeren B repräsentieren, wobei die Polymerblöcke P(B) jeweils eine Erweichungstemperatur im Bereich von - 130 °C bis + 10 °C aufweisen,
   und/oder mit Polymeren P'(A) und/oder P'(B) ist,
- wobei die Polymere P'(A) Homo- und/oder Copolymere aus den Monomeren A repräsentieren, wobei die Polymere P'(A) jeweils eine Erweichungstemperatur im Bereich von + 20 °C bis + 175 °C aufweisen,
- wobei die Polymere P'(B) Homo- und/oder Copolymere aus den Monomeren B repräsentieren, wobei die Polymere P'(B) jeweils eine Erweichungstemperatur im Bereich von - -130 °C bis + 10 °C aufweisen,
- wobei die Polymere P'(A) beziehungsweise P'(B) bevorzugt mit den Polymerblöcken P(A) beziehungsweise P(B) mischbar sind.

Sofern sowohl Polymere P'(A) und Polymere P'(B) zugemischt sind, werden diese vorteilhaft derart gewählt, daß die Polymere P'(A) und P'(B) nicht homogen miteinander mischbar sind.

Als Monomere für die Diblockcopolymere P(A)-P(B), für die Polymere P'(A) beziehungsweise P'(B) werden bevorzugt die bereits genannten Monomere der Gruppen A und B eingesetzt.

Die Diblockcopolymere weisen bevorzugt eine Molmasse Mₙ zwischen 5.000 und 600.000 g/mol, stärker bevorzugt zwischen 15.000 und 400.000 g/mol, besonders bevorzugt zwischen 30.000 und 300.000 g/mol auf. Sie besitzen vorteilhaft eine Polydispersität D = M_{w}/Mₙ von nicht mehr als 3. Es ist günstig, wenn der Anteil der Polymerblöcke P(A) in Bezug auf die Zusammensetzung des Diblockcopolymers zwischen 3 und 50 Gew.%, bevorzugt zwischen 5 und 35 Gew.% liegt.

Typische Einsatzkonzentration von Diblockcopolymeren im Blend betragen bis zu 250 Gewichtsteile auf 100 Gewichtsteile höhere Blockcopolymere, enthaltend die Einheit P(A)-P(B)-P(A). Die Polymere P'(A) beziehungsweise P'(B) können als Homo- und auch als Copolymere aufgebaut sein. Sie werden entsprechend dem oben gesagten vorteilhaft derart gewählt, daß sie mit den Blockcopolymeren P(A) beziehungsweise P(B) verträglich sind. Die Kettenlänge der Polymere P'(A) beziehungsweise P'(B) ist in bevorzugter Weise derart gewählt, daß sie die Kettenlänge des mit ihr bevorzugt mischbaren bzw. assoziierbaren Polymerblocks nicht übersteigt, vorteilhaft 10 % niedriger, sehr vorteilhaft 20 % niedriger ist als diese. Der Polymerblock P(B) kann auch so gewählt werden, daß seine Länge die Hälfte der Blocklänge des Polymerblocks P(B) des Triblockcopolymers nicht übersteigt.

Zur Herstellung der erfindungsgemäßen Blockcopolymere können prinzipiell alle kontrolliert oder lebend verlaufenden Polymerisationen eingesetzt werden, ebenso auch Kombinationen verschiedener kontrollierter Polymerisationsverfahren. Hierbei seien z. B., ohne den Anspruch auf Vollständigkeit zu besitzen, neben der anionischen Polymerisation die ATRP, die Nitroxid/TEMPO- kontrollierte Polymerisation oder mehr bevorzugt der RAFT-Prozeß genannt, also insbesondere solche Verfahren, die eine Kontrolle der Blocklängen, Polymerarchitektur oder auch, aber nicht notwendigerweise, der Taktizität der Polymerkette erlauben.

Radikalische Polymerisationen können in Gegenwart eines organischen Lösungsmittels oder in Gegenwart von Wasser oder in Gemischen aus organischen Lösungsmitteln und/oder organischer Lösungsmittel mit Wasser oder in Substanz durchgeführt werden. Bevorzugt wird so wenig Lösungsmittel wie möglich eingesetzt. Die Polymerisationszeit für radikalische Prozesse beträgt - je nach Umsatz und Temperatur - typischerweise zwischen 4 und 72 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan, n-Heptan oder Cyclohexan), Ketone (wie Aceton oder Methylethylketon), Siedegrenzenbenzin, aromatische Lösungsmittel wie Toluol oder Xylol oder Gemische vorgenannter Lösungsmittel verwendet. Für die Polymerisation in wäßrigen Medien beziehungsweise Gemischen aus organischen und wäßrigen Lösungsmitteln werden zur Polymerisation bevorzugt Emulgatoren und Stabilisatoren zugesetzt.

Findet eine Methode der radikalischen Polymerisation Anwendung, werden als Polymerisationsinitiatoren vorteilhaft übliche radikalbildende Verbindungen wie beispielsweise Peroxide, Azoverbindungen und Peroxosulfate eingesetzt. Auch Initiatorengemische eignen sich hervorragend.

Zur Radikalstabilisierung werden in günstiger Vorgehensweise Nitroxide des Typs (VIIa) oder (VIIb) eingesetzt: 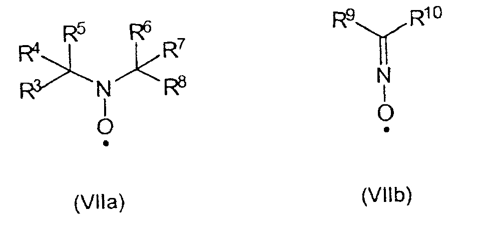
wobei R³, R⁴, R⁵, R⁶, R⁷, R⁸, R⁹, R¹⁰ unabhängig voneinander folgende Verbindungen oder Atome bedeuten:
i) Halogenide, wie z.B. Chlor, Brom oder lod;
ii) lineare, verzweigte, cyclische und heterocyclische Kohlenwasserstoffe mit 1 bis 20 Kohlenstoffatomen, die gesättigt, ungesättigt oder aromatisch sein können;
iii) Ester -COOR¹¹, Alkoxide -OR¹² und/oder Phosphonate -PO(OR¹³)₂, wobei R¹¹, R¹² oder R¹³ für Reste aus der Gruppe ii) stehen.

Verbindungen der (VIIa) oder (VIIb) können auch an Polymerketten jeglicher Art gebunden sein (vorrangig in dem Sinne, daß zumindest einer der oben genannten Reste eine derartige Polymerkette darstellt) und somit zum Aufbau der Blockcopolymere als Makroradikale oder Makroregler genutzt werden.

Mehr bevorzugt werden kontrollierte Regler für die Polymerisation von Verbindungen des Typs:
- 2,2,5,5-Tetramethyl-1-pyrrolidinyloxyl (PROXYL), 3-Carbamoyl-PROXYL, 2,2-Dimethyl-4,5-cyclohexyl-PROXYL, 3-Oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6- Tetramethyl-1-piperidinyloxypyrrolidinyloxyl (TEMPO), 4-Benzoyloxy-TEMPO, 4-Methoxy-TEMPO, 4-Chlor-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methylpropylnitroxid
- N-tert.-Butyl-1-(2-naphtyl)-2-methylpropylnitroxid
- N-tert.-Butyl-1-diethylphosphono-2,2-dimethylpropylnitroxid
- N-tert.-Butyl-1-dibenzylphosphono-2,2-dimethylpropylnitroxid
- N-(1-Phenyl-2-methyl propyl)-1-diethylphosphono-1-methylethylnitroxid
- Di-t-butylnitroxid
- Diphenylnitroxid
- t-Butyl-t-amylnitroxid

US 4,581,429 A offenbart ein kontrolliert radikalisches Polymerisafionsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind femer in den Schriften US 5,945,491 A, US 5,854,364 A und US 5,789,487 A beschrieben.

Weiterhin vorteilhaft kann das erfindungsgemäße Blockcopolymer über eine anionische Polymerisation hergestellt werden. Hier werden als Reaktionsmedium bevorzugt inerte Lösungsmittel verwendet, wie z. B. aliphatische und cycloaliphatische Kohlenwasserstoffe, oder auch aromatische Kohlenwasserstoffe.

Das lebende Polymer wird im allgemeinen durch die Struktur P_{L}(A)-Me repräsentiert, wobei Me ein Metall der Gruppe I, wie z. B. Lithium, Natrium oder Kalium, und P_{L}(A) ein wachsender Polymerblock aus den Monomeren A ist. Die Molmasse des herzustellenden Polymerblocks wird durch das Verhältnis von Initiatorkonzentration zu Monomerkonzentration vorgegeben. Zum Aufbau der Blockstruktur werden zunächst die Monomere A für den Aufbau eines Polymerblocks P(A) hinzugegeben, dann wird anschließend durch Zugabe der Monomere B ein Polymerblock P(B) angeknüpft und nachfolgend durch erneute Zugabe von Monomeren A ein weiterer Polymerblock P(A) anpolymerisiert, so daß ein Triblockcopolymer P(A)-P(B)-P(A) entsteht. Alternativ kann P(A)-P(B)-M durch eine geeignete difunktionelle Verbindung gekuppelt werden. Auf diesem Weg sind auch Sternblockcopolymere (P(B)-P(A))ₙ zugänglich. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z. B. n-Butylacrylat und 2-Ethylhexylacrylat, direkt polymerisiert werden können und nicht im Polymer durch eine Umesterung mit dem entsprechenden Alkohol generiert werden müssen.

Als sehr bevorzugter Herstellprozeß wird eine Variante der RAFT-Polymerisation (reversible addition-fragmentation chain transfer polymerization) durchgeführt. Der Polymerisationsprozeß ist z. B. in den Schriften WO 98/01478 A1 und WO 99/31144 A1 ausführlich beschrieben. Zur Herstellung von Triblockcopolymeren eignen sich besonders vorteilhaft Trithiocarbonate der allgemeinen Struktur R"'-S-C(S)-S-R''' (Macromolecules 2000, 33, 243-245), mittels derer in einem ersten Schritt Monomere für die Endblöcke P(A) polymerisiert werden. In einem zweiten Schritt wird anschließend der Mittelblock P(B) synthetisiert. Nach der Polymerisation der Endblöcke P(A) kann die Reaktion abgebrochen und reinitiiert werden. Ferner kann auch ohne Reaktionsunterbrechung sequentiell polymerisiert werden. In einer sehr vorteilhaften Variante werden beispielsweise die Trithiocarbonate (VIII) und (IX) oder die Thioverbindungen (X) und (XI) zur Polymerisation eingesetzt, wobei ϕ ein Phenylring, der unfunktionalisiert oder durch Alkyl- oder Arylsubstituenten, die direkt oder über Ester- oder Etherbrücken verknüpft sind, funktionalisiert sein kann, oder eine Cyanogruppe oder ein gesättigter oder ungesättigter aliphatischer Rest sein kann. Der Phenylring ϕ kann optional einen oder mehrere Polymerblöcke, beispielsweise Polybutadien, Polyisopren, Polychloropren oder Poly(meth)acrylat, das entsprechend der Definition für P(A) oder P(B) aufgebaut sein kann, oder Polystyrol tragen, um nur einige zu nennen. Funktionalisierungen können beispielsweise Halogene, Hydroxygruppen, Epoxidgruppen, stickstoff- oder schwefelenthaltende Gruppen sein, ohne daß diese Liste Anspruch auf Vollständigkeit erhebt.

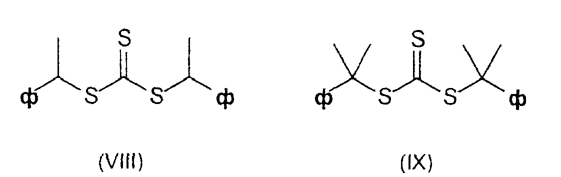

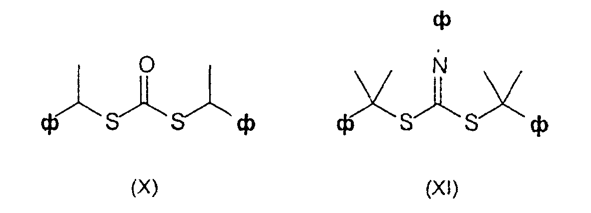

Außerdem können Thioester der allgemeinen Struktur R^{IV}-C(S)-S-R^{V} zum Einsatz kommen, insbesondere, um asymmetrische Systeme herzustellen. Dabei können R^{IV} und R^{V} unabhängig voneinander gewählt werden und R^{IV} ein Rest aus einer der folgenden Gruppen i) bis iv) und R^{V} ein Rest aus einer der folgenden Gruppen i) bis iii) sein kann:
i) C₁- bis C₁₈-Alkyl, C₂- bis C₁₈-Alkenyl, C₂- bis C₁₈-Alkinyl, jeweils linear oder verzweigt; Aryl-, Phenyl-, Benzyl-, aliphatische und aromatische Heterozyklen;
ii) -NH₂, -NH-R^{VI}, -NR^{VI}R^{VII}, -NH-C(O)-R^{VI}, -NR^{VI}-C(O)-R^{VII}, -NH-C(S)-R^{VI}, -NR^{VI}-C(S)-R^{VII}, 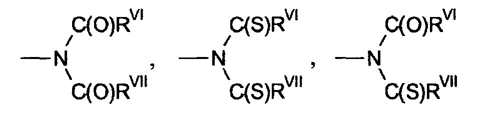 wobei R^{VI} und R^{VII} unabhängig voneinander gewählte Reste aus der Gruppe i) sind;
iii) -S-R^{VIII}, -S-C(S)-R^{VIII}, wobei R^{VIII} ein Rest aus einer der Gruppen i) oder ii) sein kann;
iv) -O-R^{VIII}, -O-C(O)-R^{VIII}, wobei R^{VIII} ein Rest gewählt aus einer der Gruppen i) oder ii) sein kann.
   In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo- oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seinen hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodüsobutyronitril, Diisopropylpercarbonat, tert-Butylperoctoat, Benzpinacol. In einer sehr bevorzugten Variante wird als radikalischer Initiator 1,1'-Azo-bis-(cyclohexylnitril) (Vazo 88®, DuPont®) oder 2,2-Azo-bis-(2-methylbutannitril) (Vazo 67®, DuPont®) verwendet. Weiterhin können auch Radikalquellen verwendet werden, die erst unter UV-Bestrahlung Radikale freisetzen.

Beim konventionellen RAFT-Prozeß wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden. Das Lösemittel wird bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

Den erfindungsgemäßen blockcopolymerhaltigen Haftklebemassen können Klebharze beigemischt werden. Prinzipiell lassen sich alle in dem entsprechenden Polyacrylatmittelblock P(B) löslichen Harze verwenden. Geeignete Klebharze umfassen unter anderem Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatisch-aromatische Kohlenwasserstoffharze, um nur einige zu nennen. Vorrangig werden Harze gewählt, die vorzugsweise mit dem Elastomerblock verträglich sind. Der Gewichtsanteil der Harze am Blockcopolymer beträgt typischerweise bis zu 40 Gew.-%, stärker bevorzugt bis zu 30 Gew.-%.
Für eine spezielle Art der Ausführung der Erfindung können auch Harze verwendet werden, die mit dem Polymerblock P(A) verträglich sind.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.
Generell ist bei den Zusatzstoffen, wie Harzen, Füller und Weichmacher zu beachten, daß diese das Ausgasungsverhalten nicht verschlechtern. Es sollten somit bevorzugt Substanzen eingesetzt werden, die auch unter hoher Temperaturbelastung eine sehr geringe Flüchtigkeit besitzen.

Bevorzugt wird die innere Festigkeit (Kohäsion) der Haftklebemasse durch die physikalische Vernetzung der Polymerblöcke P(A) erzeugt. Die so erhaltene physikalische Vernetzung ist typischerweise thermoreversibel. Für eine nichtreversible Vernetzung können die Haftklebemassen zusätzlich chemisch vemetzt werden. Hierzu können die acrylatblockcopolymerhaltigen Haftklebemassen, welche für die erfindungsgemäßen reversiblen Systeme eingesetzt werden, optional verträgliche Vemetzersubstanzen enthalten. Als Vemetzer eignen sich z. B. Metallchelate, multifunktionelle Isocyanate, multifunktionelle Amine oder multifunktionelle Alkohole. Auch multifunktionelle Acrylate lassen sich vorteilhaft als Vernetzer für eine actinische Bestrahlung verwenden.

Zur optionaten Vernetzung mit UV-Licht werden den potyacrylathaltigen Blockcopolymeren, welche in den erfindungsgemäßen Systemen zum Einsatz kommen, UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetaphenon, substituierte α-Ketote, wie z. B. 2-Methoxy-2-hydroxypropiophenon, aromatische Sulfonylchloride, wie z. B. 2-Naphthylsulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcydohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon-Reste, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.

Prinzipiell ist es auch möglich, die erfindungsgemäß eingesetzten Haftklebemassen mit Elektronenstrahlen zu vemetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhome, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

### Selbstklebebänder (Produktaufbauten)

Die erfindungsgemäßen Haftklebemassen können als oder für Haftklebebänder verwendet werden. Derartige Haftklebebänder können insbesondere wie folgt aufgebaut sein:
a] Einschichtige Klebstoffolien, bestehend aus einer Schicht der erfindungsgemäßen Haftklebemasse, die als Basispolymer ein oder mehrere erfindungsgemäße Blockcopolymere enthält.
b] Mehrschichtige Klebstoffolien, die eine oder mehrere Schichten der erfindungsgemäßen Haftklebemasse aufweist, die als Basispolymer ein oder mehrere erfindungsgemäße Blockcopolymere enthält.

### a) Einschichtige Produktaufbauten

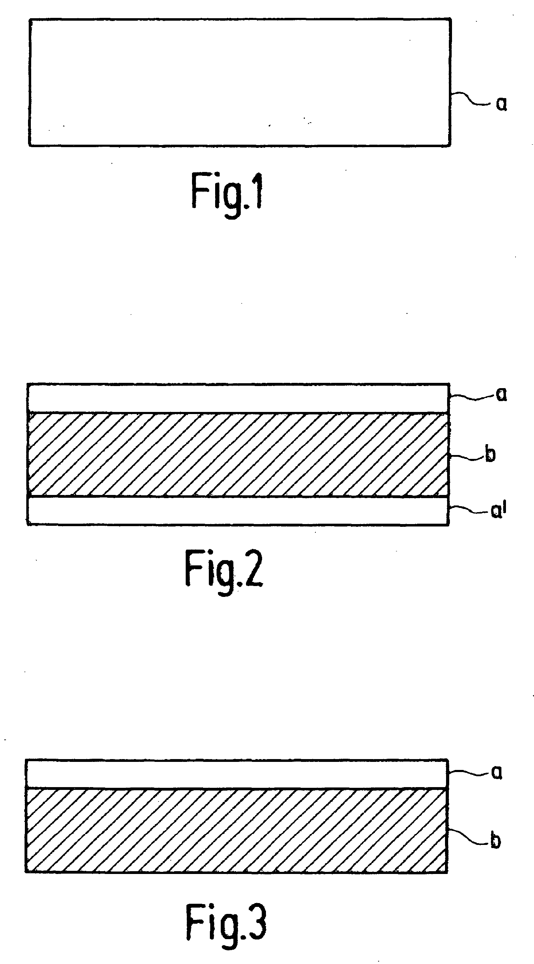

Auf Grund der hohen Kohäsion der Acrylatblockcopolymere können acrylatblockcopolymerhaltige Selbstklebestreifen oder -folien aus einer Einzelschicht a (Fig. 1) mit einer Dicke von bis zu mehreren Millimetern hergestellt werden. Infolge der intrinsischen UV-Stabilität benötigen entsprechende Selbstklebestreifen/-folien keine oder nur sehr geringe Mengen an Lichtschutzmitteln. Wasserklar transparente Ausführungsformen hoher Lichtstabilität sind daher leicht zugänglich.

### b) Mehrschichtaufbauten

Des weiteren können mehrschichtige Selbstklebestreifen/-folien, die eine oder mehrere Schichten der erfindungsgemäßen Haftklebemasse aufweist, genutzt werden, z. B. zweischichtige, dreischichtige oder auch Multischichtsysteme (siehe Fig. 2 für einen Dreischichtaufbau; Fig. 3 für einen Zweischichtaufbau).

Weiterhin sind Klebebänder in Form von Mehrschichtaufbauten nutzbar, welche Schichten beinhalten, die keine der zuvor beschriebenen Acrylatblockcopolymere enthalten. Entsprechende dreischichtige Selbstklebebänder enthalten z. B. eine Mittelschicht b und zwei Deckschichten a und a' (Fig. 2). Schicht b kann beispielsweise Elastomere wie Naturkautschuk, synthetisches Polyisopren, Polybutadien oder thermoplastische Elastomere wie Styrolblockcopolymere (z. B. Styrol-Isopren-Styrol, Styrol-Butadien-Styrol bzw. deren hydrierte Analoga Styrol-Ethylen/Propylen-Styrol und Styrol-Ethylen/Butylen-Styrol) bzw. die zu vorgenannten Styrolblockcopolymeren analogen PMMA-haltigen Polymere Poly(MMA-Isopren-MMA), Poly(MMA-Butadien-MMA), Poly(MMA-Ethylen/Propylen-MMA) und Poly(MMA-Ethylen/Butylen-MMA) in reiner oder in mit Harzen und/oder anderen Additiven abgemischter Form enthalten. Weiterhin kann die Mittelschicht b in einer sehr bevorzugten Ausführungsform auch Trägerfolien, Schäume, Vliese, Papiere, Metallfolien und weitere üblicherweise in der Herstellung von Haftklebemassen verwendeten Trägermaterialien umfassen.

Die Deckschichten a und a' bestehen aus erfindungsgemäßen Haftklebemassen, wobei a und a' den gleichen oder einen unterschiedlichem Aufbau aufweisen können. Deckschichten aus erfindungsgemäßen Haftklebemassen können unterschiedliche oder gleiche Dicken aufweisen und sind typischerweise mindestens 10 µm, stärker bevorzugt mindestens 25 µm dick.

Ferner sind Klebebänder in Form von Zweischichtsystemen vorgesehen, die aus zwei Schichten a und b bestehen (Fig. 3).

Schicht b kann beispielsweise aus Elastomeren wie z. B. Naturkautschuk oder thermoplastischen Elastomeren wie z. B. Acrylatblockcopolymeren oder Styrolblockcopolymeren mit Polydien-Mittelblöcken in reiner oder mit Harzen und/oder anderen Additiven abgemischter Form aufgebaut sein. Schicht b ist insbesondere durch eine Dicke von mindestens 10 µm gekennzeichnet, bevorzugt durch eine Dicke von nicht weniger als 25 µm, stärker bevorzugt durch eine Dicke von nicht weniger als 100 µm. Weiterhin kann die Mittelschicht b in einer sehr bevorzugten Ausführungsform auch Trägerfolien, Schäume, Vliese, Papiere, Metallfolien und weitere üblicherweise in der Herstellung von Haftklebemassen verwendeten Trägermaterialien umfassen. In einer für Kabelbandagierklebebänder sehr bevorzugten Ausführungsform wird das Haftklebeband aus einem Vliesträgermaterial und einer haftklebrigen Schicht a aufgebaut. Zur Erfüllung der geringen Ausgasung sollte in einer bevorzugten Ausführungsform ebenfalls ein Trägermaterial aus Vlies eingesetzt werden, daß ebenfalls ein geringes Ausgasungsverhalten aufweist, wie z. B. Maliwatt, 80 g/m², Feinheit 22, der Fa. Cattano).

Die Deckschicht a besteht aus einer erfindungsgemäßen Haftldebmasse. Die Deckschicht weist typischerweise eine Dicke von nicht weniger als 10 µm, mehr bevorzugt nicht weniger als 25 µm auf.

### Prüfmethoden

### A. Dieselfestigkeit

Die Haftklebemasse wurde im Transferverfahren mit 50 g/m² auf ein Maliwattvlies kaschiert. Ein 2 cm breiter Streifen dieses Musters wird anschließend um einen aus 10 Kabeln bestehenden Kabelbaum mit einem Durchmesser von 10 mm gewickelt und für 48 Stunden bei 60 °C gelagert. Dann wird der Kabelbaum U-förmig gebogen und in den Dieselkraftstoff getaucht, wobei das Klebebandende aus dem Kraftstoff herausragt. Der gesamte Verbund wird für 5 Minuten oder für 24 h in dem Kraftstoff gelagert, dann nimmt man den Kabelbaum mit Klebeband heraus, läßt 2 Minuten den Dieselkraftstoff abtropfen und biegt dann den Kabelsatz um einen Dorn mit einem Durchmesser von 50 mm. Der Test wird bestanden, wenn sich keine Tüten und Falten bilden, der Klebstoff sich nicht ablöst, die Haftklebemasse nicht schwammig wird und auch keine Farbablösungen auftreten.

### B. Klebkraft

Die Prüfung der Schälfestigkeit (Klebkraft) erfolgte gemäß PSTC-1. Auf eine 23 µm dicke PET-Folie wird eine 100 µm dicke Haftklebeschicht aufgebracht. Ein 2 cm breiter Streifen dieses Musters wird auf eine Stahlplatte durch dreimaliges doppeltes Überrollen mittels einer 2 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen.

### C. Scherfestigkeit (C1; C2)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm * 13 mm (Länge * Breite). Anschließend wurde mit 2 kg Anpreßdruck das Klebeband viermal auf den Stahlträger gedrückt. Bei 70 °C wurde ein 1-kg-Gewicht an dem Klebeband befestigt (C2), bei Raumtemperatur ebenfalls ein 1-kg-Gewicht (C1). Die gemessenen Scherstandzeiten sind in Minuten angegeben und entsprechen dem Mittelwert aus drei Messungen.

### D. Gelpermeationschromatograpie (GPC)

Die Bestimmung des mittleren Molekulargewichtes M_{w} und der Polydispersität PD erfolgte durch Gelpermeationschromatographie. Als Eluent wurde THF mit 0, 1 Vol.% Trifluoressigsäure eingesetzt. Die Messung erfolgte bei 25 °C. Als Vorsäule wurde PSS-SDV, 5µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkortzentration betrug 4 g/l, die Durchflußmenge 1,0 ml pro Minute. Es wurde gegen Polystyrol-Standards gemessen.

### E. Ausgasungsverhalten

Die leichtflüchtigen Bestandteile wurden über GC-MS ermittelt. Als Meßgeräte wurden verwendet:
GC: Hewlett Packard HP 5890 SERIES 11 MS: Hewlett Packard HP 5989 A

Zur Messung wurde eine DB-5 Säule mit 60 m Länge, 0,25 mm Innendurchmesser und 1 µm Filmdicke eingebaut. Die Messung erfolgte mit einem Temperaturprogramm 50 °C (3 min.) - 150 C/min - 260 °C (2 min.). Als Trägergas wurde Wasserstoff (90 kPa) mit einem Strom von 1 ml/min benutzt. Das Splitverhältnis betrug 1 : 10. Der Test gilt als erfüllt, wenn die Menge der flüchtigen Anteile 2000 µg/g nicht überschreitet.

### F. Lösungsmittelbeständigkeit

Ein doppelseitig haftklebriges Klebebandmuster der Größe 2,5 x 2,5 cm² wird zwischen zwei Stahlplatten durch Andrücken mit 8 kg für 1 min verklebt. Ein Testmuster und ein Referenzmuster werden für 24 h bei 23 °C und 50 % rel. Luftfeuchte äquilibriert. Das Testmuster wird anschließend für 10 min in ein lösungsmittelgemisch (50 % Toluol, 30 % iso-Octan, 15 % Diisobutylen, 5 % Ethanol) getaucht, mit Zellstoff abgetupft und 5 min liegen gelassen. In einem dynamischen Schertest wird dann die Maximalkraft Fₘₐₓ bestimmt, die zu einem Versagen der Verklebung führt. Die Ergebnisse des Test- und Referenzmusters werden verglichen. Der Test gilt als bestanden, wenn der für das Testmuster gefundene Meßwert nicht niedriger als 10 % des Wertes des Referenzmusters ist.

### Prüfmusterherstellung

### Herstellung eines RAFT-Reglers:

Die Herstellung des Reglers Bis-2,2'-phenylethyltrithiocarbonats (Formel VIII) erfolgte ausgehend von 2-Phenylethylbromid mit Dischwefelkohlenstoff und Natriumhydroxid nach einer Vorschrift von Synth. Comm., 1988, 18 (13), 1531. Ausbeute 72 %. ¹H-NMR (CDCl₃), : 7,20 - 7,40 ppm (m, 10 H); 3,81 ppm (m, 1 H); 3,71 ppm (m, 1 H); 1,59 ppm (d, 3 H); 1,53 ppm (d, 3 H).

### Herstellung von Nitroxiden:

(a) Herstellung des difunktionellen Alkoxyamins (XII):
   Es wurde analog der Versuchsvorschrift aus Journal of American Chemical Society, 1999, 121(16), 3904 vorgegangen. Als Ausgangsstoffe wurden 1,4-Divinylbenzol und Nitroxid (XIII) eingesetzt. 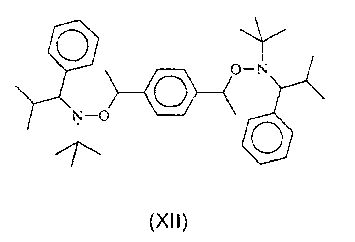
(b) Herstellung des Nitroxids (XIII) (2,2,5-Trimethyl-4-phenyl-3-azahexan-3-nitroxid):
   Es wurde analog der Versuchsvorschrift aus Joumal of American Chemical Society, 1999, 121(16), 3904 vorgegangen.

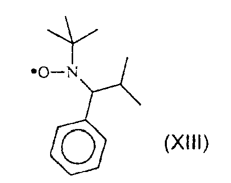

### Herstellung von Polystyrol (A):

In einem für die radikalische Polymerisation konventionellen 2-L-Reaktor werden unter Stickstoffatmosphäre 362 g Styrol und 3,64 g Regler Bis-2,2'-phenylethyltrithiocarbonat vorgelegt. Es wird auf 110°C Innentemperatur erhitzt und mit 0,15 g Vazo 67® (DuPont) initiiert. Nach 10 Stunden Reaktionszeit werden 100 g Toluol hinzugegeben. Nach 24 Stunden Reaktionszeit wird mit weiteren 0,1 g Vazo 67® initiiert und weitere 24 Stunden polymerisiert. Während der Polymerisation steigt die Viskosität merklich an. Zur Kompensation werden 150 g Toluol als Endverdünnung nach 48 Stunden hinzugegeben.

Zur Aufreinigung wurde das Polymer in Methanol gefällt, über eine Fritte abfiltriert und anschließend im Vakuumtrockenschrank getrocknet.

Die Durchführung der Gelpermeationschromatographie (Test D) gegen Polystyrol Standards ergab Mₙ = 29300 g/mol und eine Polydispersität von 1,2.

### Beispiel 1

Ein für radikalische Polymerisationen konventioneller Reaktor wurde mit 32 g Trithiocarbonat-funktionalisiertem Polystyrol (A), 442 g 2-Ethylhexylacrylat, 35 g Acrylsäure und 0,12 g Vazo 67® (Fa. DuPont) befüllt. Nach 20 Minuten Durchleiten von Argon und zweimaligem Entgasen wurde der Reaktor unter Rühren auf 70 °C hochgeheizt und für 24 h polymerisiert.

Zur Gewinnung des Polymers wurde auf Raumtemperatur (RT) abgekühlt, das Blockcopolymer PS-P(EHA/AS)-PS mit Aceton auf 50 % verdünnt und dann über ein konventionelles Rakel auf einen mit Saran geprimerten 23 µm dicken PET-Träger beschichtet und dann über 5 verschiedenen Stufen mit 60, 80, 100, 120 und 120 °C getrocknet. Die durchschnittliche Aufenthaltsdauer in jeder Temperaturzone betrug 80 Sekunden. Der Masseauftrag betrug 50 g/m². Anschließend wurde nach Testmethode B und C ausgetestet.

### Beispiel 2

Ein für radikalische Polymerisationen konventioneller Reaktor wurde mit 32 g Trithiocarbonat-funktionalisiertem Polystyrol (A), 442 g 2-Ethylhexylacrylat, 17 g Acrylsäure und 0,12 g Vazo 67® (Fa. DuPont) befüllt. Nach 20 Minuten Durchleiten von Argon und zweimaligem Entgasen wurde der Reaktor unter Rühren auf 70 °C hochgeheizt und für 24 h polymerisiert.

Zur Gewinnung des Polymers wurde auf RT abgekühlt, das Blockcopolymer PS-P(EHA/AS)-PS mit Aceton auf 50 % verdünnt und dann über ein konventionelles Rakel auf einen mit Saran geprimerten 23 µm dicken PET-Träger beschichtet und dann über 5 verschiedenen Stufen mit 60, 80, 100, 120 und 120 °C getrocknet. Die durchschnittliche Aufenthaltsdauer in jeder Temperaturzone betrug 80 Sekunden. Der Masseauftrag betrug 50 g/m². Anschließend wurde nach Testmethode B und C ausgetestet.

### Beispiel 3

Ein für radikalische Polymerisationen konventioneller Reaktor wurde mit 3,2 kg Trithiocarbonat-funktionalisiertem Polystyrol (A), 34,2 kg n-Butylacrylat, 10 kg Isobornylacrylat, 4,5 kg Acrylsäure und 0,12 kg Vazo 67™ (Fa. DuPont) befüllt. Nach 20 Minuten Durchleiten von Argon und zweimaligen Entgasen wurde der Reaktor unter Rühren auf 70 °C hochgeheizt für 36 h polymerisiert.

Zur Isolierung wurde auf RT abgekühlt und das Blockcopolymer PS-P(BA/AS)-PS durch einen Einschneckenextruder (Bersdorff) mit drei Entgasungeinheiten aufkonzentriert. Die Vakuumstufen betrugen 200 mbar, 60 mbar und 9 mbar. Der Durchsatz an Speiselösung belief sich auf 40 kg/h, wobei die Eintrittslösung durch eine Feedvorwärmung 120 °C vorgewärmt wurde. Die Austrittstemperatur der Acrylatschmelzhaftklebemasse betrug etwa 130 °C.

Anschließend wurde durch die Schmelzhaftklebemasse für 2 Minuten Wasserdampf geleitet, in einem gleichläufig betriebenen Doppelschneckenextruder (Welding Engineers) vom Wasser/Verunreinigungsgemisch gereinigt und dann die Klebemasse aus der Schmelze durch eine Breitschlitzdüse auf einen ausgasungsarmen (<2 µg/g flüchtige Anteile nach Testmethode B) mit Saran geprimerten 23 µm dicken PET-Träger beschichtet. In einer IR-Zone wurde für 80 Sekunden mit 120 °C nachgeheizt. Der Masseauftrag betrug 50 g/m². Anschließend wurde nach Testmethode B und C ausgetestet.

### Beispiel 4:

Allgemeine Durchführung: Eine Mischung aus dem Alkoxyamin (XII) und dem Nitroxid (XIII) (10 Mol-% zu Alkoxyamin (XII)) wird mit dem Monomeren B (für den späteren Polymerblock P(B)) gemischt, mehrmals unter Herabkühlen auf -78 °C entgast und anschließend in einem geschlossenen Behälter unter Druck auf 110°C erhitzt. Nach 36 h Reaktionszeit wird das Monomer A (für den späteren Polymerblock P(A)) hinzugegeben und weitere 24 Stunden bei dieser Temperatur polymerisiert.

In Analogie zur allgemeinen Durchführung der Polymerisation wurden 0,739 g des difunktionellen Initiators (XII), 0,0287 g des freien Nitroxids (XIII), 500 g n-Butylacrylat (B) und 105 g Methylmethacrylat (A) eingesetzt. Zur Isolierung des Polymers wurde auf Raumtemperatur abgekühlt, das Blockcopolymer PMMA-PBuA-PMMA in 750 ml Dichlormethan gelöst und dann in 6,0 L Methanol (auf -78 °C gekühlt) unter starkem Rühren gefällt. Der Niederschlag wurde über eine gekühlte Fritte abfiltriert.

Das erhaltene Produkt wurde im Vakuumtrockenschrank bei 10 Torr und 45 °C 12 Stunden lang aufkonzentriert.

Charakterisierung (Test D): PMMA-PBuA-PMMA Mₙ = 186 kg/mol (M_{w}/Mₙ = 1,7).

Das Blockcopolymer wurde aus der Schmelze auf eine mit Saran geprimerte 23 µm dicke PET-Trägerfolgie beschichtet. In einer IR-Zone wurde für 80 Sekunden mit 120 °C nachgeheizt. Der Masseauftrag betrug 50 g/m². Anschließend wurde nach Testmethode B und C ausgetestet.

Zur Herstellung der Muster für die Prüfmethoden A und E wurden die Beispiel 1 bis 4 statt auf PET-Folie auf ein silikonisiertes Trennpapier mit einem Silikonmasseauftrag von 1,2 g/m² beschichtet und anschließend auf einen Vliesträger (Maliwatt, 80 g/m², Feinheit 22, Fa. Cottano) umlaminiert. Abschließend wurden die Prüfmethoden A und E durchgeführt. Ferner wurden Muster für Prüfmethode F hergestellt, indem Polymere aus Beispiel 1 bis 4 auf silikonisiertes Trennpapier mit einem Sitikonmassenauftrag von 1,2 g/m² beschichtet wurde und mit einer zweiten Lage Trennpapier abgedeckt.

### Ergebnisse

Nach der Prüfmusterherstellung wurden zunächst die klebtechnischen Eigenschaften der Beispiele 1 bis 4 ermittelt. Die Ergebnisse sind in Tabelle 1 aufgelistet. Zur Beurteilung wurde die Klebkraft auf Stahl und die Scherfestigkeit bei verschiedenen Temperaturen bestimmt.

| Tabelle 1 | | | |
|---|---|---|---|
| Beispiel | SSZ RT/C1 | SSZ 70°C/C2 | KK Stahl /B |
| 1 | +10000 | 2085 | 5,1 |
| 2 | +10000 | 880 | 4,7 |
| 3 | +10000 | 355 | 4,6 |
| 4 | +10000 | +10000 | 4,4 |

| | | | |
|---|---|---|---|
| SSZ: Scherstandzeiten in min | | | |
| KK: Klebkraft in N/cm | | | |

Aus den gemessenen Werten geht hervor, daß die erfindungsgemäßen Haftklebemassen alle eine sehr gute Scherfestigkeit aufweisen, auch ohne zusätzliche Vernetzung durch actinische Bestrahlung. Die klebtechnischen Anforderungen werden somit erfüllt.

In einem weiteren Test wurde die Dieselbeständigkeit dieser Haftklebemassen untersucht. Hierfür wurden die Beispiele 1 bis 4 auf Trennpapier beschichtet und dann auf einen Maliwatt Vlies umkaschiert, der für viele Kabelbandagierklebebänder als Trägermaterial eingesetzt wird. Dann wurde die Prüfmethode A mit diesen Mustern durchgeführt. Der Tabelle 2 kann entnommen werden, daß alle Muster den Dieseltest bestanden haben und somit als dieselfest eingestuft werden.

| Tabelle 2 | | | | |
|---|---|---|---|---|
| Beispiele | 1 | 2 | 3 | 4 |
| | n.5min / n.24h | n.5min / n.24h | n.5min / n.24h | n.5min / n.24h |
| Tütenbildung | nein / nein | nein / nein | nein / nein | Nein / nein |
| Faltenbildung | nein / nein | nein / nein | nein / nein | Nein / nein |
| Klebstoffablösung | nein / nein | nein / nein | nein / nein | Nein / nein |
| Schwammigkeit | nein / nein | nein / nein | nein / nein | Nein / nein |
| Farbablösung | nein / nein | nein / nein | nein / nein | Nein / nein |
| Gesamturteil | dieselfest | dieselfest | dieselfest | dieselfest |

| | | | | |
|---|---|---|---|---|
| n.5min = nach 5 min; n.24h = nach 24 h | | | | |

Für die Eignung als Haftklebemasse in dem Automobilbereich ist weiterhin das Ausgasungsverhalten von hoher Bedeutung, da Automobilhersteller den "Neuwagengeruch" im Auto minimieren möchten. Daher wurde das Ausgasungsverhalten dieser Haftklebebänder zusätzlich bestimmt. Das Ausgasungsverhalten ist nicht mit dem Foggingtest (s. z. B. DE 198 07 752) gleichzusetzen, da hier leichtflüchtige Bestandteile detektiert werden, die den Geruch verursachen. Im Foggingtest werden eher Bestandteile nachgewiesen, die sich auf der Scheibe niederschlagen können und z. B. Harzzusätzen entstammen. Zur Überprüfung wurde daher das Ausgasungsverhalten via Headspace-GC ermittelt. Die Meßwerte sind in Tabelle 3 dargestellt.

| Tabelle 3 | |
|---|---|
| Beispiel | Flüchtige Anteile [µg/g] |
| 1 | 14 |
| 2 | 28 |
| 3 | 19 |
| 4 | 30 |

Die gemessenen Werte liegen sehr niedrig und erfüllen somit leicht die Anforderungen. Zudem kann das Ausgasungsverhalten durch die Qualität der Aufkonzentration gesteuert werden und es entstehen durch eine zusätzliche Vernetzung keine weiteren flüchtigen Bestandteile. Als flüchtige Bestandteile wurden hauptsächlich Kohlenwasserstoffhaltige Verbindungen detektiert, wie z. B. 2-Methylpentan, 3-Methylpentan, Hexan, 2-Methyl-1-propanol, 1-Butanol, 2,4-Dimethylpentan, Cyclohexan und Aceton.

Schließlich soll noch auf die Auswirkung organischer Lösungsmittel auf die Klebeigenschaften der hier beschriebenen Haftklebemassen eingegangen werden (Tabelle 4). Typischerweise führt die Lagerung in organischen Lösungsmitteln zu einer Quellung und Erweichung der Haftklebemasse und damit zu einer Verschlechterung der kohäsiven Eigenschaften. Dies wird in einer Reduktion der Haltefestigkeit deutlich, die in dynamischen Schertests gemessen werden kann. Sämtliche Beispielmuster zeigen allerdings weder ein kohäsives Versagen der Verklebung noch einen dramatischen Abfall der Adhäsionskräfte. Die Muster sind daher als lösungsmittelbeständig zu bewerten.

| Tabelle 4 | | | |
|---|---|---|---|
| Beispiel | Fₘₐₓ [N/cm²] | Fₘₐₓ^{ref} [N/cm²] | Ergebnis |
| 1 | 96,1 a | 101,8 a | Lösungsmittelbeständig |
| 2 | 89,7 a | 84,3 a | Lösungsmittelbeständig |
| 3 | 82,3 a | 79,9 a | Lösungsmittelbeständig |
| 4 | 50,6 a | 53,0 a | Lösungsmittelbeständig |

| | | | |
|---|---|---|---|
| (a : adhäsiver Bruch; ref: Referenzmuster) | | | |

### Liste der verwendeten Bezugszeichen

a Schicht aus einer ersten erfindungsgemäßen Haftklebemasse
a' Schicht aus einer zweiten erfindungsgemäßen Haftklebemasse
b Trägerschicht

## Patentansprüche

1. Haftklebemasse, umfassend zumindest 50 Gew.% zumindest eines Blockcopolymers aus einer Comonomerzusammensetwng, die Acrylsäurederivate oder Methacrylsäurederivate umfaßt, wobei
das Blockcopolymer eine Einheit P(A)-P(B)-P(A) aus einem Polymerblock P(B) und zwei Polymerblöcken P(A) umfaßt;
die Polymerblöcke P(A) unabhängig voneinander Homo- oder Copolymerblöcke aus Monomeren A darstellen, wobei die Polymerblöcke P(A) jeweils eine Erweichungstemperatur im Bereich von + 20 °C bis + 175 °C aufweisen;
P(B) einen Homo- oder Copolymerblock aus Monomeren B darstellt, wobei der Polymerblock P(B) eine Erweichungstemperatur im Bereich von -130°C bis + 10 °C aufweist; und
die Polymerblöcke P(A) und P(B) nicht homogen miteinander mischbar sind.

2. Haftklebemasse nach Anspruch 1, **dadurch gekennzeichnet, daß** das Blockcopolymer ein Blockcopolymer der Formel
P(A)-P(B)-P(A) (I)
P(B)-P(A)-P(B)-P(A)-P(B) (II)
[P(B)-P(A)]ₙX (III)
oder
[P(B)-P(A)]ₙX[P(A)]ₘ (IV),
ist, wobei n eine Ganzzahl von 3 bis 12 darstellt; m eine Ganzzahl von 3 bis 12 darstellt und X einen multifunktionellen Verzweigungsbereich darstellt.

3. Haftklebemasse nach Anspruch 2 oder Anspruch 3, **dadurch gekennzeichnet, daß** alle Polymerblöcke P(A) des Blockcopolymers dieselbe Kettenlänge aufweisen.

4. Haftklebemasse nach einem der vorstehenden Ansprüche, **dadurch gekennzeichnet, daß** alle Polymerblöcke P(B) des Blockcopolymers dieselbe Kettenlänge aufweisen.

5. Haftklebemasse nach einem der vorstehenden Ansprüche, **dadurch gekennzeichnet, daß** alle Polymerblöcke P(A) des Blockcopolymers dieselbe chemische Struktur aufweisen.

6. Haftklebemasse nach einem der vorstehenden Ansprüche, **dadurch gekennzeichnet, daß** alle Polymerblöcke P(B) des Blockcopolymers dieselbe chemische Struktur aufweisen.

7. Haftklebemasse nach einem der vorstehenden Ansprüche, **dadurch gekennzeichnet, daß** das Blockcopolymer eine Molmasse Mₙ zwischen 10.000 und 600.000 g/mol aufweist.

8. Haftklebemasse nach einem der vorstehenden Ansprüche, **dadurch gekennzeichnet, daß** das Blockcopolymer eine Polydispersität D von nicht mehr als 3 aufweist.

9. Haftklebemasse nach einem der vorstehenden Ansprüche, **dadurch gekennzeichnet, daß** das Blockcopolymer einen Anteil an Polymerblöcken P(A) zwischen 5 und 49 Gew.-%, bezogen auf die Einheit P(A)-P(B)-P(A), aufweist.

10. Haftklebemasse nach einem der vorstehenden Ansprüche, **dadurch gekennzeichnet, daß** das Verhältnis der Kettenlängen der Polymerblöcke P(A) zu denen der Polymerblöcke P(B) so gewählt wird, daß die Polymerblöcke P(A) als disperse Phase in einer kontinuierlichen Matrix der Polymerblöcke P(B) vorliegen.

11. Haftklebemasse nach einem der vorstehenden Ansprüche, **dadurch gekennzeichnet, daß** sie ferner zumindest ein Diblockcopolymer P(A)-P(B) umfaßt, wobei
der Polymerblock P(A) des Diblockcopolymers unabhängig von den Polymerblöcken der Einheit P(A)-P(B)-P(A) Homo- oder Copolymerblöcke aus den Monomeren A darstellt, wobei die Polymerblöcke P(A) jeweils eine Erweichungstemperatur im Bereich von + 20 °C bis + 175 °C aufweisen; und
der Polymerblock P(B) des Diblockcopolymers unabhängig von den Polymerblöcken der Einheit P(A)-P(B)-P(A) Homo- oder Copolymerblöcke aus den Monomeren B darstellt, wobei die Polymerblöcke P(B) jeweils eine Erweichungstemperatur im Bereich von - 130 °C bis + 10 °C aufweisen.

12. Haftklebemasse nach einem der vorstehenden Ansprüche, **dadurch gekennzeichnet, daß** das Diblockcopolymer eine Molmasse Mₙ zwischen 5.000 und 600.000 g/mol aufweist.

13. Haftklebemasse nach einem der vorstehenden Ansprüche, **dadurch gekennzeichnet, daß** das Diblockcopolymer eine Polydispersität D von nicht mehr als 3 aufweist.

14. Haftklebemasse nach einem der vorstehenden Ansprüche, **dadurch gekennzeichnet, daß** das Diblockcopolymer einen Anteil der Polymerblöcke P(A) zwischen 3 und 50 Gew.-%, bezogen auf das Diblockcopolymer aufweist.

15. Haftklebemasse nach einem der vorstehenden Ansprüche, **dadurch gekennzeichnet, daß** sie ferner zumindest ein Polymer P'(A) umfaßt, wobei das Polymer P'(A) ein Homo- oder Copolymer aus den Monomeren A darstellt und eine Erweichungstemperatur im Bereich von + 20 °C bis + 175 °C aufweist.

16. Haftklebemasse nach Anspruch 15, **dadurch gekennzeichnet, daß** das Polymer P'(A) mit den Polymerblöcken P(A) des Blockcopolymers mischbar ist.

17. Haftklebemasse nach einem der vorstehenden Ansprüche, **dadurch gekennzeichnet, daß** sie femer zumindest ein Polymer P'(B) umfaßt, wobei das Polymer P'(B) ein Homo- oder Copolymer aus den Monomeren B darstellt und das eine Erweichungstemperatur im Bereich von - 130 °C bis + 10 °C aufweist.

18. Haftklebemasse nach Anspruch 17, **dadurch gekennzeichnet, daß** das Polymer P'(B) mit den Polymerblöcken P(B) des Blockcopolymers mischbar ist.

19. Haftklebemasse nach einem der vorstehenden Ansprüche, **dadurch gekennzeichnet, daß** Polymerblock P(B) aus einer Comonomerzusammensetzung besteht, umfassend, bezogen auf den Polymerblock P(B),
(a) 75 bis 100 Gew.% Acrylsäure- und/oder Methacrylsäurederivate der Formel CH₂=CH(R¹)(COOR²)*,* wobei R¹ H oder CH₃ darstellt und R² H oder lineare, verzweigte oder ringförmige, gesättigte oder ungesättigte Alkylreste mit 1 bis 30 Kohlenstoffatomen darstellt; und
(b) 0 bis 25 Gew.-% funktionalisierte oder nicht-funktionalisierte Vinylverbindungen.

20. Verwendung einer Haftklebemasse nach einem der vorstehenden Ansprüche als Haftklebeband.

21. Verwendung einer Haftklebemasse nach einem der vorstehenden Ansprüche für ein Haftklebeband.

22. Verwendung nach Anspruch 21, **dadurch gekennzeichnet, daß** die Haftklebemasse auf eine oder beide Seiten eines Trägers beschichtet ist.

23. Verwendung nach einem der Ansprüche 20 bis 22 für Verklebeungen im Automobilbereich.
